Europäisches Patentamt

European Patent Office

Office européen des brevets

(11) Numéro de publication: **0 460 571 A1**

## (12) DEMANDE DE BREVET EUROPEEN

(21) Numéro de dépôt: **91109030.6**

(22) Date de dépôt: **03.06.91**

(51) Int. Cl.5: **H02M 3/335**

(30) Priorité: **08.06.90 FR 9007152**

(43) Date de publication de la demande:
**11.12.91 Bulletin 91/50**

(84) Etats contractants désignés:
**BE DE FR GB IT**

(71) Demandeur: **ALCATEL ESPACE**
**11, avenue Dubonnet**
**F-92407 Courbevoie Cédex(FR)**

(72) Inventeur: **Capel, Antoine**
**241 Résidence des Coteaux**
**F-31520 Ramonville(FR)**

(74) Mandataire: **Weinmiller, Jürgen et al**
**Lennéstrasse 9 Postfach 24**
**W-8133 Feldafing(DE)**

(54) **Procédé de commande d'un régulateur à découpage et dispositif de mise en oeuvre dudit procédé.**

(57) La présente invention se rapporte à un procédé de commande d'un régulateur à découpage qui est un procédé de régulation d'un paramètre variable avec le temps avec une bande passante très élevée et un contrôle de l'énergie à chaque instant, dans lequel on prévoit l'état stable du système à l'échantillon suivant, ce qui permet d'assurer la régulation dans de grandes conditions de sécurité.

Elle concerne également un dispositif de mise en oeuvre de ce procédé.

Application notamment au domaine spatial.

# FIG.2

EP 0 460 571 A1

L'invention concerne un procédé de commande d'un régulateur à découpage et un dispositif de mise en oeuvre dudit procédé.

Le procédé de l'invention peut s'utiliser dans tous les cas où un asservissement est inséré dans des structures électriques à découpage visant à réguler un paramètre. Ses applications s'étendent notamment aux domaines de l'espace, de l'avionique, et du grand public.

Le procédé de l'invention est un procédé de commande de régulateurs à découpage notamment à partir d'un modulateur contrôlé en courant crête bidirectionnel et d'une commande stabilisante par retour d'état.

Pour obtenir des performances dynamiques compatibles avec celles d'amplificateurs continus tout en mettant en oeuvre des puissances importantes (de quelques watt à plusieurs KW) avec des rendements énergétiques élevés (supérieurs à 85%), les amplificateurs et régulateurs à découpage doivent associer :
- une fréquence de synchronisation élevée (de quelques fractions de MHz à plusieurs MHz) ;
- un asservissement fort signal avec une bande passante aussi proche que possible de la moitié de la fréquence d'échantillonnage.

Deux techniques sont actuellement en compétition :
- une commande stabilisante analogique non linéaire par retour d'état préalable des divers états possibles du système ;
- un contrôle digital avec une mise en mémoire préalable des divers états possibles du système.

Une commande stabilisante par retour d'état peut être réalisée par une boucle de retour autoadaptative telle que décrite dans un article de G. Salut, J.C. Marpinard, et M. Valentin intitulé : "Large signal feedback control for power switching conversion" (PESC 1985 - Toulouse).

Cette boucle de retour met en jeu dans le cadre d'un régulateur de tension à découpage abaisseur ("buck")
- deux amplificateurs linéaires ;
- un sommateur ;
- un diviseur de fonction non linéaire ;
- un modulateur PWM non linéaire
(un modulateur PWM ou modulateur à largeur d'impulsion permet de transformer une grandeur analogique en une durée selon une horloge donnée).

Dans le cas d'un régulateur élévateur on a :
- sept amplificateurs linéaires ;
- deux diviseurs et un multiplieur non linéaire ;
- un sommateur ;
- un modulateur PWM non linéaire.

Comme décrit dans un article de A. Capel, J. C. Marpinard, G. Salut, M. Valentin et D. O'Sullivan intitulé "A bidirectionnal high power cell using large signal feedback control with maximum conduction control for space application" (ESA journal 1986 ; vol. 10), une simplification possible réside dans le fait que les informations recueillies auparavant dans les courants au milieu du circuit de puissance dans l'induction L et la charge R peuvent être réunies au niveau du courant dans la capacité C, tandis que le modulateur PWM ("Pulse width modulator") peut être polarisé par la tension d'entrée V, ce qui permet d'éliminer le diviseur de fonction non linéaire.

L'organe de commande se résume alors à :
- trois amplificateurs
- un sommateur
- un modulateur PWM ("Pulse width modulator") non linéaire.

On peut remarquer que les capteurs de courants de tous ces systèmes ne permettent pas une protection contre les court-circuits du régulateur ou de sa charge.

L'invention a pour objet de résoudre ce problème.

Elle propose à cet effet un procédé de commande d'un régulateur à découpage, caractérisé en ce que ce procédé est un procédé de régulation d'un paramètre variable avec le temps avec une bande passante très élevée et un contrôle de l'énergie à chaque instant, et en ce que l'on prévoit l'état stable du système, à l'échantillon suivant, ce qui permet d'assurer la régulation dans de grandes conditions de sécurité.

Avantageusement ce procédé permet une protection inhérente contre les effets destructeurs des surintensités et surtensions qui réside dans le fait que :
. la source énergétique d'entrée est limitée en tension (réseau de batteries, réseau solaire, réseau de distribution) ;
. la tension de sortie est en général le paramètre asservi, donc limité en amplitude ;
. l'énergie qui transite est contrôlée par prélèvement du courant pulsé.

2

Les caractéristiques et avantages de l'invention ressortiront d'ailleurs de la description qui va suivre, à titre d'exemple non limitatif, en référence aux figures annexées sur lesquelles :
- les figures 1 et 2 illustrent le fonctionnement du procédé de l'invention ;
- la figure 3 est une courbe représentant l'évolution du courant en régime transitoire ;
- la figure 4 illustre le principe de commande selon le procédé de l'invention.

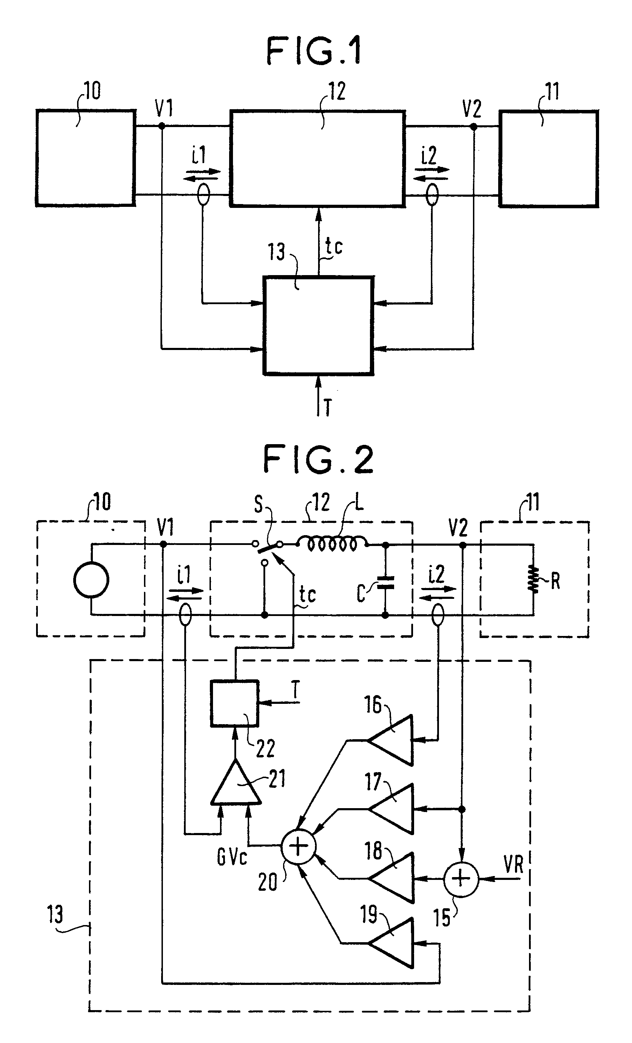

Le procédé de l'invention est un procédé de régulation d'un paramètre variable avec le temps qui concerne une boucle d'asservissement de régulateurs à découpage quand le transfert d'énergie doit être contrôlé par une commande stabilisante par retour d'état selon le schéma de la figure 1.

Entre le réseau d'entrée 10 et le réseau de sortie 11 se trouve une structure de régulateur bidirectionnelle 12 : un modulateur 13 synchronisé par une horloge extérieure T et recevant les tensions d'entrée et de sortie V1 et V2 et les courants d'entrée et de sortie $i_1$ et $1_2$ permettant de piloter (tc) cette structure bidirectionnelle 12.

Selon ce schéma, l'énergie peut transiter du réseau d'entrée 10 qui contient la source énergétique à un potentiel V1 vers le réseau d'utilisation à un potentiel V2 qui peut être passif ou contenir également une source d'énergie de telle sorte que l'énergie transmise E soit une fonction d'une tension de commande Vc selon une loi de la forme :

$$E = f(Vc)$$

Dans ce cas, le paramètre asservi est la tension d'utilisation V2 et l'énergie prélevée E sur le réseau d'entrée 10 est dimensionnée aux besoins de cet asservissement par la loi donnée ci-dessus. Si cette énergie est limitée en valeur supérieure en agissant sur cette loi, aucune situation destructrice ne peut survenir dans le réseau de sortie 11 et la structure régulateur à découpage 12 lui-même.

La structure régulateur 12 est bidirectionnelle c'est-à-dire que la même structure électrique s'applique quand les réseaux V1 et V2 sont intervertis, à condition que le paramètre asservi et le réseau débiteur d'énergie ne soient pas d'un même côté de la structure régulateur 12, comme représenté sur la figure 1.

La protection inhérente de cette structure 12 contre les effets destructeurs des surintensités et surtensions réside dans le fait que
. la source énergétique V1 est limitée en tension (réseau de batteries, réseau solaire, réseau de distribution) ;
- la tension de sortie V2 est en général le paramètre asservi ; elle est donc limitée en amplitude ;
- l'énergie E qui transite est contrôlée par prélèvement du courant pulsé $i_1(t)$ de sorte que

$$E = V1 \int_{0}^{t_c} i_1(t)\, dt = V2 i_2\, T$$

t étant le temps de passage de l'énergie par conduction des commutateurs du régulateur statique
T étant la période de l'horloge de synchronisation

Ce courant pulsé $i_1(t)$ ne peut atteindre des valeurs destructrices car il est contrôlé en courant crête directement au niveau de la source par une loi de la forme :

$$i_{1\,Max} = G\, Vc$$

G étant une constante
Vc la tension de commande

Il s'ensuit que si cette relation est limitée en valeur supérieure ;le courant correspondant ne pourra jamais être dépassé en valeur positive ou négative puisque le principe de transfert est bidirectionnel même lors de court-circuits.

La tension de commande Vc est la résultante d'une commande stabilisante par retour d'état qui tient compte de tous les paramètres du système en valeur instantanée sous une forme générale.

$$Vc = (1-K)k_1\,(VR-V2) + k_2 i_2 + k_3 V2 + k_4 V1$$

où VR est une tension de consigne

$k_1$, $k_2$, $k_3$, $k_4$ des gains purs

K une constante qui fixe la dynamique du système et telle que

$$0 \leq K \leq 1$$

Lorsque $K \to 0$ l'asservissement est rapide et lent lorsque $K \to 1$.

L'établissement de la relation précédente donnant Vc est le résultat de l'étude du comportement dynamique à fort signal du système électrique dans l'espace d'état qui permet de fixer les valeurs des gains purs $k_n$, sans pour autant modifier l'allure générale de cette relation qui reste valable pour toutes les configurations de régulateurs à découpage d'où le principe de cette commande dans ces applications multiples, dont le schéma bloc peut être représenté par la représentation générale de la figure 2.

Le calcul de la tension de commande Vc est réalisé soit de façon analogique soit de façon digitale, par un microprocesseur par exemple.

Le circuit de puissance représenté est un circuit L, C donc du second ordre, mais il pourrait, bien entendu, être un circuit différent d'un ordre supérieur.

Le modulateur 13 comprend un sommateur 15, quatre amplificateurs 16, 17, 18 et 19 de gains respectifs $k_2$, $k_3$, $k_1(1-K)$, et $k_4$ , un sommateur 20, un comparateur 21 entre la valeur G Vc calculée et le courant $i_1$ mesurée, une bascule 22.

Ce circuit ne fait pas intervenir de modulateur à dent de scie, ni de fonctions non linéaires telles que multiplieurs ou diviseurs, mais uniquement des amplificateurs linéaires, un comparateur et un circuit logique qui actionne l'interrupteur S selon un signal d'horloge T et le fait basculer lorsque

$$i_1(t) = G \, Vc(t)$$

Le temps t qui satisfait cette relation définit alors le rapport cyclique D du convertisseur qui reste régi par les lois classiques de transfert d'énergie inhérentes à leurs structures. On a :

$$D = \frac{tc}{T}$$

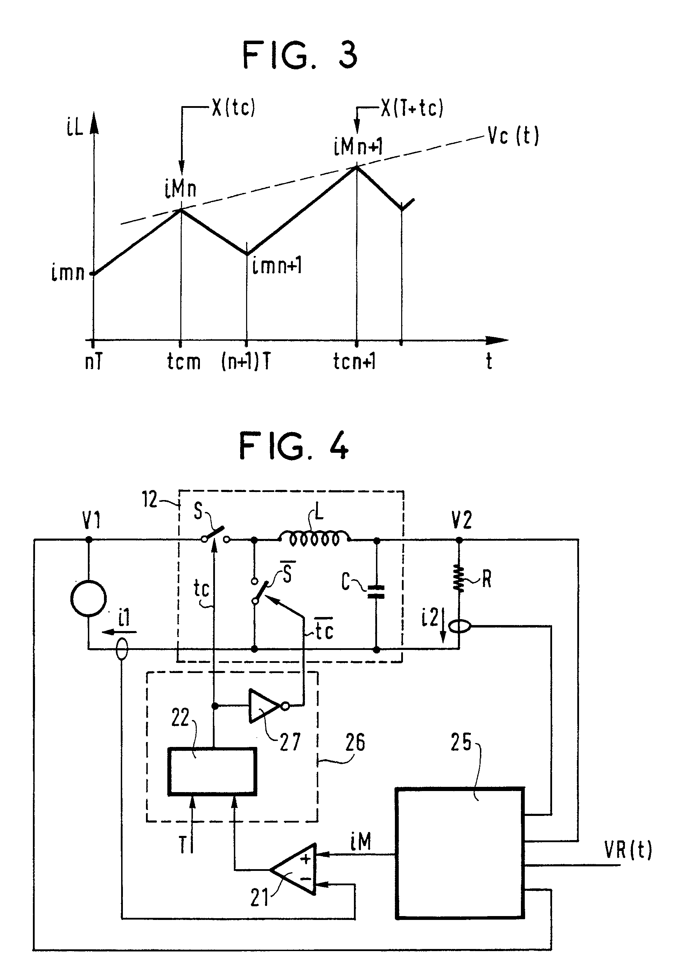

Quel que soit le type de régulateur à découpage, le courant qui transite dans l'inductance L du circuit a la forme triangulaire représentée sur la figure 3. En régime transitoire où le système évolue loin de son point d'équilibre, la valeur crête $i_M$ du courant est différente de la période d'échantillonnage de rang n à la suivante de rang n + 1. On a donc :

$$i_M(nT) \neq i_M((n+1)T)$$

A l'équilibre on obtient un courant en forme de triangles égaux.

Le procédé de l'invention consiste à établir par le calcul lors de l'échantillon nT la valeur que devra atteindre le courant crête $i_M$ à l'échantillon suivant $((n+1)T)$, compte tenu des valeurs des divers paramètres au cours de la période. On a donc une relation récurrente :

$$i_M((n+1)T) = f(i_M(nT), V1(nT), V2(nT))$$

Le courant $i_1(t)$ étant mesuré en permanence, les commutateurs S et $\overline{S}$ sont activés par une horloge externe T et désactivés lorsque

$$i_1(t) = i_M((n+1)T)$$

A un instant nT on prélève donc des informations qui varient peu dans le circuit on les rentre dans un circuit de calcul 25 qui va prédire les valeurs du vecteur d'état à l'instant suivant (n + 1)T. On connaît la butée de l'échantillon suivant. Il y a donc arrêt lorsque toutes les valeurs du vecteur d'état ont atteint leurs valeurs calculées.

Ainsi on prévoit les conséquences d'une perturbation avant qu'elle n'arrive : on anticipe numériquement. Le circuit de calcul 25 pourrait être réalisé avec un micropocesseur.

On obtient une évolution stable du système pendant tout le transitoire. On peut ainsi atteindre l'équilibre par exemple en trois échantillons.

D'où le schéma de représenté sur la figure 4. Les tensions d'entrée et de sortie V1 et V2 et le courant de sortie $i_2$ sont mesurés et associés à une consigne VR(t) pour élaborer la valeur crête $i_M$ du courant i(t) lors de la période (n + 1) ; Le circuit 25 étant un circuit de calcul de $i_M$ ((n + 1)t).

L'information $i_M$ est comparée en permanente à la valeur du courant $i_1$(t) circulant dans la structure. Lorsque la relation précédente est satisfaite, le temps de commutation $t_c$ du commutateur S préalablement activé par l'horloge T et qui correspond au fonctionnement dynamiquement stable du système est atteint. Le commutateur S est désactivé et le commutateur $\overline{S}$ est activé au moyen du circuit logique 26 englobant la bascule 22 et la porte PAS 27.

Si une limite supérieure est appliquée au calcul de $i_M$ le courant $i_2$(t) ne peut jamais dépasser cette valeur même lors de court-circuits. Ce procédé ne met en jeu des fonctions non linéaires telle que diviseur, multiplieur de fonction, ou modulateur PWM.

Le calcul de $i_M$((n + 1)T) qui entre dans la constitution des fonctions de l'organe de commande de la figure 4, est une représentation câblée de la théorie de commande stabilisante par retour d'état qui est décrite brièvement dans le cas de l'application de la figure 4, où la structure de puissance est celle d'une cellule "buck".

Si X est le vecteur d'état du système, et A et B les matrices du réseau électrique de la cellule buck, on a :

$$X(t) = \begin{bmatrix} i_2(t) \\ V2(t) \end{bmatrix} \qquad A = \begin{bmatrix} 0 & -\dfrac{1}{L} \\ \dfrac{1}{C} & -\dfrac{1}{RC} \end{bmatrix} \qquad B = \begin{bmatrix} \dfrac{1}{L} \\ 0 \end{bmatrix}$$

Les équations d'états de ce circuit sur une période conduisent à la relation de récurrence, en se référant à la figure 3.

$$X(T+t_c) = e^{AT} X(t_c) + A^{-1} \left[ e^{ATc} - 1 \right] BV$$

qui se met sous une forme simple, en se limitant aux développements d'ordre 2, totalement justifiés car les constantes de temps du circuit sont supérieures à la période T :

$$X(T+t_c) = \left(1 + AT + \frac{(AT)^2}{2}\right) X(t_c) + t_c V \left(A + \frac{Atc}{2}\right) B$$

Soit au niveau des composantes du vecteur d'état :

$$i_{n+1} = \left(1 - \frac{T^2}{2LC}\right) i_n + \left(\frac{T^2}{2LRC} - \frac{T}{L}\right) V_n + \frac{tcV}{L}$$

$$V_{n+1} = \left(\frac{T}{C} - \frac{T^2}{2RC^2}\right) i_n + \left(1 - \frac{T}{RC} + \frac{T^2}{2}\left(-\frac{1}{LC} + \frac{1}{R^2C^2}\right)\right) V_n + t_c \frac{V1}{2LC}$$

Les performances dynamiques sont fixées par la relation de recurrence que l'on impose au système, si VR est la consigne et K une constante comprise entre 0 et 1.

$$V_{n+1} - VR = K (V_n - VR)$$

En remplaçant $V_{n+1}$ par sa valeur dans le système précédent, il vient :

$$i_{n+1} = i_M ((n+1)T) = (1-K)\frac{e}{T} (VR - V_n) + i_2 - \frac{T}{L} V_n + \frac{tcV1}{L}$$

qui se met sous la forme générale, déjà décrite précédemment

$$i_M \left[ (n+1)T \right] = (1-K) k_1 (VR - V2) + k_2 i_2 + k_2 V2 + k_4 V1$$

Cette forme générale est valable pour toutes les structures de régulateurs à découpage.

Le schéma d'une telle structure est donné sur la figure 2.

Dans le procédé de l'invention on effectue, donc, une analyse en boucle fermée du système : on contrôle la tension de sortie V2 en contrôlant le courant $i_2$ qui transite de l'entrée vers la sortie ; on contrôle l'énergie en contrôlant la quantité d'énergie qui transite à chaque instant. Le courant $i_2$ et la tension V2 forment les composantes d'un vecteur d'état.

Il est bien entendu que la présente invention n'a été décrite et représentée qu'à titre d'exemple préférentiel et que l'on pourra remplacer ses éléments constitutifs par des éléments équivalents sans, pour autant, sortir du cadre de l'invention.

**Revendications**

1. Procédé de commande d'un régulateur à découpage, caractérisé en ce que ce procédé est un procédé de régulation d'un paramètre variable avec le temps avec une bande passante très élevée et un contrôle de l'énergie à chaque instant, dans lequel on prévoit l'état stable du système à l'échantillon suivant, ce qui permet d'assurer la régulation dans de grandes conditions de sécurité.

2. Procédé selon la revendication 1, caractérisé en ce que :
   - on mémorise tous les paramètres du système ;
   - on analyse le comportement du système dans le domaine d'état ;
   - on arrête le système lorsqu'il est stabilisé.

3. Procédé selon la revendication 2, caractérisé en ce que l'on se fixe une valeur d'énergie recherchée, lorsque l'on atteint cette valeur on arrête, et à une période ultérieure on peut alors recommencer.

4. Procédé selon l'une quelconque des revendications précédentes, caractérisé en ce que l'énergie transmise (E) est une fonction d'une tension de commande (Vc).

5. Procédé selon la revendication 4, caractérisé en ce que la tension de commande (Vc) est la résultante d'une commande stabilisante par retour d'état qui tient compte de tous les paramètres du système sous une forme instantanée.

6. Procédé selon la revendication 4, caractérisé en ce que le calcul de la tension de commande (Vc) est réalisé soit de façon analogique, soit de façon digitale, par un micro-processeur par exemple.

7. Procédé selon la revendication 5, caractérisé en ce que la tension de commande (Vc) est de la forme :

$$Vc = (1 - K)kl(VR - V2) + k_2 i_2 + k_3 V2 + k_4 V1$$

avec :

- $k_1$, $k_2$, $k_3$, $k_4$ gains purs ;
- K : constante qui fixe la dynamique du système ;
- V1, V2 : tensions d'entrée et de sortie ;
- $i_2$ : courant de sortie ;
- VR : tension de consigne

8. Procédé selon l'une quelconque des revendications précédentes, caractérisé en ce que, pour un régulateur bidirectionnel (12) disposé entre un réseau d'entrée (10) et un réseau de sortie (11) avec un modulateur (13) synchronisé par une horloge extérieure (T) qui reçoit les tensions d'entrée et de sortie (V1 et V2) et les courants d'entrée et de sortie ($i_1$ et $i_2$) pour piloter (tc) cette structure bidirectionnelle (12), les tensions d'entrée et de sortie (V1 et V2) et le courant de sortie ($i_2$) sont mesurés et associés à une consigne (VR(t)) pour élaborer la valeur crête $i_M$ du courant d'entrée ($i_1$(t)) lors de la période d'échantillonnage suivante.

9. Procédé selon la revendication 8, caractérisé en ce que la valeur crête $i_M$ est comparée en permanente à la valeur du courant d'entrée $i_1$(t) circulant dans la structure (12), lorsque l'égalité est satisfaite le fonctionnement dynamiquement stable du système est atteint.

10. Dispositif de mise en oeuvre du procédé selon l'une quelconque des revendications précédentes, caractérisé en ce qu'il comprend un modulateur (13) qui comporte un premier sommateur (15) ; quatre amplificateurs (16, 17, 18, 19) de gains respectifs $k_2$, $k_3$, $k_1$ (1-K), et $k_4$ de manière à obtenir la valeur $i_M$ = G Vc, Vc étant la tension de commande qui est de la forme :

$$Vc = (1 - K)kl(VR - V2) + k_2 i_2 + k_3 V2 + k_4 V1$$

avec :
- $k_1$, $k_2$, $k_3$, $k_4$ gains purs ;
- K : constante qui fixe la dynamique du système ;
- V1, V2 : tensions d'entrée et de sortie ;
- $i_2$ : courant de sortie ;
- VR : tension de consigne
un second sommateur (20), un comparateur (21) entre la valeur maximum en courant d'entrée calculée et le courant d'entrée ($i_1$) mesurée.

# FIG.1

# FIG.2

# FIG. 3

# FIG. 4

**Office européen
des brevets**

**RAPPORT DE RECHERCHE
EUROPEENNE**

Numéro de la demande

**EP 91 10 9030**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-4 672 303  (NEWTON)<br>– – – | | H 02 M 3/335 |
| A | US-A-4 931 716  (JOVANOVIC)<br>– – – | | |
| A,D | ESA JOURNAL vol. 10, 1986,<br>& J.C.MARPINARD: "A Bi-Directional High-Power Cell Using Large-signal Feedback Control With Maximum Current Conduction Control for Space Applications"<br>– – – – – | | |

| | DOMAINES TECHNIQUES RECHERCHES (Int. Cl.5) |
|---|---|
| | H 02 M |

Le présent rapport de recherche a été établi pour toutes les revendications

| Lieu de la recherche | Date d'achèvement de la recherche | Examinateur |
|---|---|---|
| La Haye | 08 août 91 | BERTIN M.H.J. |

CATEGORIE DES DOCUMENTS CITES
X : particulièrement pertinent à lui seul
Y : particulièrement pertinent en combinaison avec un
autre document de la même catégorie
A : arrière-plan technologique
O : divulgation non-écrite
P : document intercalaire
T : théorie ou principe à la base de l'invention

E : document de brevet antérieur, mais publié à la
date de dépôt ou après cette date
D : cité dans la demande
L : cité pour d'autres raisons
----------------------------------------------------------
& : membre de la même famille, document
correspondant